# EUROPÄISCHE PATENTSCHRIFT

(11) **EP 1 799 546 B1**
(45) Veröffentlichungstag und Bekanntmachung des Hinweises auf die Patenterteilung: **22.06.2011**
(21) Anmeldenummer: 05774112.6
(22) Anmeldetag: 12.08.2005
(51) Int. Cl.: B64D 1/16, B64D 1/22

(54) **VORRICHTUNG ZUR AUFNAHME UND/ODER ABGABE VON FLÜSSIGKEITEN AUS EINEM FLUGGERÄT**
DEVICE FOR RECEIVING LIQUIDS IN AN AIRCRAFT AND/OR RELEASING LIQUIDS THEREFROM
DISPOSITIF POUR RECEVOIR DES LIQUIDES DANS UN AERONEF ET/OU DISTRIBUER DES LIQUIDES A PARTIR D'UN AERONEF

(30) Priorität: 28.08.2004 DE 102004041774
(43) Veröffentlichungstag der Anmeldung: 27.06.2007
(73) Patentinhaber: Von Mohos, Zoltan, 50259 Pulheim (DE)
(72) Erfinder: Von Mohos, Zoltan, 50259 Pulheim (DE)
(74) Vertreter: Langmaack, Jürgen
(86) Internationale Anmeldenummer: PCT/EP2005/008790
(87) Internationale Veröffentlichungsnummer: WO 2006/024383

(56) Entgegenhaltungen:
- WO-A-01/69058
- WO-A-94/28975
- FR-A- 1 481 100
- GB-A- 2 348 383
- US-A- 3 698 480
- US-A- 3 754 601
- US-A- 3 897 829
- US-A- 4 979 571
- US-B1- 6 209 593

## Beschreibung

Die vorliegende Erfindung betrifft eine Vorrichtung zur Aufnahme und/oder Ausgabe von Flüssigkeiten aus einem Fluggerät, angeordnet insbesondere in einem Flugzeug.

Die Aufnahme großer Mengen an Flüssigkeiten ist Voraussetzung für einen sinnvollen Einsatz von Fluggeräten, insbesondere Flugzeugen, beispielsweise bei der Löschung von Bränden, der Bewässerung von Feldern, der Düngung oder Verbringung von Pestiziden sowie dem Verbringen von Einteisungsmitteln. Insbesondere ist hierbei wünschenswert, nicht nur möglichst große Mengen an entsprechenden Flüssigkeiten aufzunehmen, sondern die Betankung der hierfür notwendigen Tanks auch mit möglichst hoher Geschwindigkeit ohne aufwändige Maßnahmen durchzuführen.

Aus der US 4 979 571 A ist eine Vorrichtung zum Erzeugen von Löschschaum bekannt, die in einem Hubschrauber angeordnet ist. Diese bekannte Vorrichtung weist ein Tankmodul mit einem Tankbehälter für Wasser und einem Tankbehälter für Schaumkonzentrat auf, wobei der Tankbehälter für Wasser über eine Wasserleitung und ein Proportionalventil mit einer Boosterpumpe verbunden ist und der Tankbehälter für Schaumkonzentrat über eine Schaumkonzentratleitung und das Proportionalventil mit der Boosterpumpe verbunden ist, und wobei die Boosterpumpe vor dem Tankbehälter für Wasser und dem Tankbehälter für Schaumkonzentrat angeordnet ist. Diese bekannte Vorrichtung weist ein über die Boosterpumpe mit dem Tankmodul verbindbares Regelventil mit einem Verschlusselement auf, mittels welchem in Offenstellung die Wasser-Schaumkonzentrat-Mischung aus dem Tankmodul abgelassen wird. Diese bekannte Vorrichtung weist ein Betankungsmodul, welches über eine Zufuhrleitung mit dem Tankmodul verbunden ist, und einen an einer Wickelvorrichtung angeordneten Schlauch mit einem Aufnahmeelement auf, welches mindestens eine Öffnung aufweist, welches aus dem Hubschrauber abgelassen Wasser aufnimmt, so dass die Betankung der Vorrichtung erfolgt.

Aus DE 39 05 118 A1 ist eine Vorrichtung zum Transport von Feuerlöschmitteln bekannt, welche auf einem Transportfahrzeug, beispielsweise Kettenfahrzeuge, Lastkraftwagen, Hubschrauber oder Schiffe, angeordnet werden kann. Die dort offenbarte Vorrichtung stellt ein autonomes Feuerlöschsystem dar, welches mit üblichen Transportmitteln zu den Brandherden transportiert werden kann. Die Vorrichtung weist einen Behälter in Containerbauweise mit mehreren durch mindestens ein Längsschott und ein Querschott unterteilten Kammern Aufnahme des Feuerlöschmittels, beispielsweise Wasser, sowie einen an einer Stirnseite des Behälters angrenzenden Maschinenraum zur Aufnahme der Feuerlöschgeräte, und mehrere durch Außenwände des Behälters ragende, verschließbare Anschlussstutzen sowie mindestens eine Öffnung zum Einfüllen und zur Entnahme des Feuerlöschmittels auf. Die in DE 39 05 118 A1 offenbarte Vorrichtung wird mit einem Transportfahrzeug an eine Wasseraufnahmestelle gefahren, und der Behälter wird dort mittels beispielsweise einer Ansaug-Feuerlöschpumpe gefüllt. Das aufgenommene Feuerlöschmittel wird dann zum Brandherd transportiert und über entsprechende Feuerlöschvorrichtungen wieder abgegeben. Nachteilig an der aus der DE 39 05 118 A1 bekannten Vorrichtung ist insbesondere, dass durch diese einerseits keine Hochgeschwindigkeitsbetankung, andererseits keine Entleerung bei hoher Geschwindigkeit ausschließlich durch atmosphärischen Druck der Vorrichtung ermöglicht ist, andererseits ist die Vorrichtung relativ komplex aufgebaut, so dass diese nur eine beschränkte Flexibilität im Hinblick auf die aufzunehmende Feuerlöschwassermenge zeigt.

Die US 3,698,480, welche den nächsten Stand der Technik darstellt, beschreibt ein Cargo-Flugzeug, welches mit festem oder flüssigem Material beladen werden kann, und welches im Flug die Ladung wieder abgeben kann. Der dem Flugzeug zugehörige Tank zur Aufnahme der Feuerbekämpfungsmittel wird gemäß der US 3,698,480 am Boden beladen.

Es ist daher Aufgabe der vorliegenden Erfindung, eine Vorrichtung zur Verfügung zu stellen, welche einerseits flexibel auf die jeweiligen Gegebenheiten zugeschnitten ist, andererseits auch eine schnelle Betankung derselben erlaubt.

Zur Lösung dieser Aufgabe wird eine Vorrichtung zur Aufnahme und/oder Abgabe von Flüssigkeiten aus einem Fluggerät, angeordnet in einem Fluggerät, vorgeschlagen.
- mit wenigstens zwei Tankmodulen mit mindestens einem Tankbehälter, der über mindestens einen Verbindungsschacht mit einem Sammeltank verbunden ist, wobei der Sammeltank unter dem Tankbehälter angeordnet ist, und wobei die Tankbehälter über den Sammeltank miteinander verbunden sind;
- mit einem über dem Sammeltank mit dem Tankmodul verbindbaren Schottmodul mit einem Verschlusselement, mittels welchem in Offenstellung Flüssigkeiten aus dem Tankmodul abgelassen werden; und
- mit einem Betankungsmodul, welches über mindestens eine Zufuhrleitung mit dem Tankmodul verbunden ist, und einem an einer Wickelvorrichtung angeordneten Schlauch mit einem Aufnahmeelement, welches mindestens eine Öffnung aufweist, welches aus dem Fluggerät abgelassen Wasser aufnimmt, so dass die Betankung der Vorrichtung erfolgt.

Mit der erfindungsgemäßen Vorrichtung ist es möglich, kostengünstig Flüssigkeiten in verschieden großen Mengen aufzunehmen und schnell wieder auszubringen. Über die Verbindung der einzelnen Module, insbesondere auch mehrerer Tankmodule, über einen Sammelschacht, ist ein schneller Aufbau der erfindungsgemäßen Vorrichtung im Hinblick auf die gewünschten aufzunehmenden Flüssigkeitsmengen gewährleistet. Dabei können die einzelnen Module, insbesondere die Tankmodule, nicht nur hintereinander aneinandergereiht werden, sondern es ist alternativ auch möglich, durch an Sammeltank und/oder Tankbehälter, bevorzugt Sammeltank, angeordnete Querverbindungselemente Verbindungen zu parallel angeordneten Tankmodulen herzustellen. Hierdurch ist es möglich, eine große vernetzte Anordnung von Tankmodulen zu bilden, wobei diese lediglich ein Schott und ein Betankungsmodul sowie eine Entleerungsvorrichtung aufweisen müssen. Es ist jedoch auch möglich, bei einer derart vernetzten Anordnung der erfindungsgemäßen Vorrichtung mehrere Schott- bzw. Betankungsmodule und Entleerungsmodule vorzusehen, um eine weiter beschleunigte Betankung oder auch Entleerung der erfindungsgemäßen Vorrichtung zu erlangen. Der die Tankmodule untereinander bzw. das Tankmodul mit einem Schottmodul verbindende Sammeltank kann als Verbindungsmittel beispielsweise Flansche mit aufgelegten bzw. -brachten Dichtungen, darüber hinaus bevorzugt zusätzlich auch mit Steckelementen versehen, aufweisen, so dass eine stets sichere Verbindung der einzelnen Module gewährleistet ist. Das jeweils letzte Modul einer Reihe hintereinander angeordneter Tankmodule weist dann einfach ein Schließelement auf, welches auf den Flansch des letzten Tankmoduls aufgesetzt wird. Die Verbindungen zwischen den Sammelschächten parallel nebeneinander angeordneter Tankmodule können dabei auf die gleiche Art und Weise über Flansche erfolgen - es kann aber insbesondere auch vorgesehen sein, hier einen Kugelhahn o.Ä. vorzusehen.

In einer bevorzugten Ausführungsform ist die mindestens eine Öffnung in einer äußeren Wandung des Aufnahmeelements angeordnet, weiter bevorzugt als Einschnitt ausgebildet, der entgegen der Flugrichtung ausgestellt ist. Dabei ist besonders vorteilhaft, wenn die Einschnitte V-förmig erfolgen, da hierdurch ein einfaches Ausstellen der betreffenden Teile des Aufnahmeelements zur Bildung einer mindestens ausreichend großen Öffnung ermöglicht ist. "Ausstellen" im Sinne der vorliegenden Erfindung bedeutet, dass die betreffenden durch Einschnitte gebildeten Teile des Aufnahmeelements erhaben über der äußeren Oberfläche des Aufnahmeelements sind. Durch das Ausstellen der durch die Einschnitte gebildeten mindestens einen Öffnung gegen die Flugrichtung kann beispielsweise bei der Aufnahme von Löschwasser mittels eines über einen See oder Meer fliegenden Fluggeräts Wasser durch das Aufnahmeelement aufgenommen und anschließend den Tankmodulen der erfindungsgemäßen Vorrichtung zugeführt werden.

Das Aufnahmeelement kann insbesondere in einer aerodynamisch und/oder hydronautisch optimierten Form ausgebildet sein. Es kann in einer alternativen Ausführungsform mit einem eigenen Antrieb versehen sein, wobei dann bevorzugt die Geschwindigkeit zwischen Fluggerät und Aufnahmeelement synchronisiert werden kann.

Besonders bevorzugt ist, dass das Betankungsmodul oder das Schottmodul eine Pumpvorrichtung aufweist, durch welche die in dem Bereich zwischen äußerer und der weiteren mindestens einen inneren Wandung des Aufnahmeelements aufgenommene Flüssigkeit über eine zentrale, innen liegende Pumpleitung des Aufnahmeelements sowie den Schlauch in das Tankmodul gepumpt wird, wobei die Pumpleitung die innere Wandung des Aufnahmeelements bildet. Dabei kann die Pumpvorrichtung beispielsweise als Ansaugpumpe ausgebildet und in der Wickelvorrichtung des Betankungsmoduls Platz sparend im Inneren derselben oder aber einfach zugänglich im Schottmodul integriert sein. Das Schottmodul, aber auch das Betankungsmodul kann noch einen Generator oder dergleichen für eine eigenständige Energieversorgung aufweisen.

Durch den mindestens zweiwandigen Aufbau des Aufnahmeelements werden Turbulenzen in der aufgenommenen Flüssigkeit abgebaut und deren Strömungsgeschwindigkeit gemindert. In einer bevorzugten Ausführungsform weisen sowohl die äußere Wand als auch die innere Wand bei einer zweiwandigen Ausbildung des Aufnahmeelements bzw. die mehreren inneren Wände Öffnungen, beispielsweise in Form von V-förmigen Einschnitten, auf. Hierdurch gelangt Flüssigkeit von außen nach innen im Aufnahmeelement und kann über die zentrale innere Leitung, auch Pumpleitung genannt, in das Tankmodul gepumpt werden. Durch die Perforation der Wandungen werden die Turbulenzen als auch die Strömungsgeschwindigkeit der aufgenommen Flüssigkeit gemindert, so dass mit einem hohen Wirkungsgrad gepumpt werden kann. Die innere Leitung (Pumpleitung) ist dabei bevorzugt an ihrem am Betankungsmodul/Schlauch entgegengesetzten Ende verschlossen.

Alternativ befindet sich an dem dem Schlauch entgegengesetzten Ende des Aufnahmeelements ein Verschlussmittel, welches derart angeordnet ist, dass die in den Bereich zwischen einer äußeren, mit mindestens einer Öffnung versehenen Wandung des Aufnahmeelements, und der inneren, vorzugsweise nicht mit Einschnitten versehenen mindestens einen weiteren Wandung bzw. Pumpleitung des Aufnahmeelements gelangte Flüssigkeitsmenge sich im Kopfbereich, d.h. an dem dem Schlauch entgegengesetzten Ende des Aufnahmeelements, sammelt, und von dort durch die innen liegende Pumpleitung, welche durch den Schlauch selbst gebildet sein kann, den Tankmodulen der erfindungsgemäßen Vorrichtung zugeführt wird. Im Kopfbereich des Aufnahmeelements weist somit die äußere Wandung eine größere Länge auf als die innen liegende Pumpleitung.

Vorteilhaft bei einer derartigen Ausgestaltung des Aufnahmeelements ist, dass das sich im Kopfbereich des Aufnahmeelements sammelnde Wasser weniger turbulent als das durch die mindestens eine Öffnung in das Aufnahmeelement einströmende Wasser ist, so dass die Pumpe die Flüssigkeit in das bzw. die Tankmodule mit einem höheren Wirkungsgrad pumpt.

Zur Stabilisierung kann bei einer derartigen Betankung der erfindungsgemäßen Vorrichtung bevorzugt eine oder mehre Flossen an der äußeren Oberfläche des Aufnahmeelements angeordnet sein, weiter bevorzugt kann dieses durch Gewichte beschwert sein. Schließlich kann als Hilfsvorrichtung noch ein parallel zum Aufnahmeelement und auch zum Schlauch ein Stahlseil geführt sein, wodurch die Zugbeanspruchung des Aufnahmeelements bei einer Luft-Wasser-Betankung aufgenommen werden und auf die vorzugsweise in einer Rahmenkonstruktion angeordneten Module der erfindungsgemäßen Vorrichtung übertragen wird, wenn eine Verbindung des Stahlseils mit der Rahmenkonstruktion erfolgt.

Die Module können grundsätzlich insbesondere aus Verbundwerkstoffen hergestellt sein.

Alternativ kann auch vorgesehen sein, dass am Kopfende, d.h. dem dem Schlauch entgegengesetzten Ende, des Aufnahmeelements selbst eine Pumpvorrichtung angebracht ist, wodurch dann eine Ansaugpumpvorrichtung, angeordnet insbesondere im Betankungsmodul, entfällt. Eine derartige Ausbildung des Aufnahmeelements ist insbesondere dann vorteilhaft, wenn die erfindungsgemäße Vorrichtung im stationären Betrieb betankt wird.

In einer weiteren alternativen Ausführung kann auch vorgesehen sein, dass ein einwandiges, schlauchartiges Aufnahmeelement beispielsweise über einen Bajonettverschluss mit dem Schlauch verbunden ist und nach Einbringung desselben in eine Flüssigkeit mittels einer beispielsweise im Betankungsmodul angeordneten Pumpvorrichtung oder einer im Kopfbereich des Aufnahmeelements angeordneten Pumpe die Flüssigkeit in die Tankmodule der erfindungsgemäßen Vorrichtung gepumpt wird.

Das Aufnahmeelement kann in einer weiteren alternativen Ausführungsform derart ausgestaltet sein, dass dieses mindestens einen Rotationskörper aufweist. Dabei kann der Rotationskörper als Scheibenrad ausgebildet sein. Der Rotationskörper ist vorzugsweise mindestens doppelwandig aufgebaut, und weist auf seinen beiden Seiten eine Vielzahl von Öffnungen auf, durch welche Flüssigkeit aufgenommen werden kann. Die Flüssigkeit wird durch die Öffnungen aufgenommen und über ein Verbindungsglied in den Schlauch geleitet. In einer besonders bevorzugten Ausführungsform weist dabei das Aufnahmeelement mindestens zwei Rotationskörper auf. Das Aufnahmeelement kann dabei zusätzlich zur Stabilisierung mindestens eine oder aber mehrere Flossen aufweisen. Des Weiteren kann der Grundkörper, welcher die Rotationskörper hält, ebenso wie Letzterer aerodynamisch und/oder hydronautisch optimiert ausgestaltet sein.

An dem dem Schlauch bzw. dem Betankungsmodul entgegengesetzten Ende des Aufnahmeelements kann gegebenenfalls ein Stabilisierungselement bzw. ein Schleppkörper vorgesehen sein, insbesondere angekoppelt. Dieses dämpft den Aufschlag des Aufnahmeelements auf der Wasseroberfläche insbesondere bei einer Betankung im Flug, ein Springen auf der Wasseroberfläche wird vermieden. Zudem kann je nach Ausbildung des Stabilisierungselements (Beschwerung) die Eintauchtiefe des Aufnahmeelements beeinflusst werden.

Vorzugsweise ist das Aufnahmeelement jedoch mindestens zweiwandig ausgebildet, weiter bevorzugt genau zweiwandig. Das Aufnahmeelement kann beispielsweise über einen Bajonettverschluss mit dem Schlauch verbunden sein, es kann jedoch auch als beispielsweise einwandiges Schlauchstück über den Schlauch gezogen und dort mittels beispielsweise eines Spannbandes sicher fixiert werden. Hierdurch wird ebenfalls ein zweiwandiger Aufbau des Aufnahmeelements erzielt. Vorzugsweise sind zwischen einer äußeren, mit mindestens einer Öffnung versehenen Wandung und der nächst liegenden inneren Wandung bei einer zweiwandigen Ausführung, mithin der Wandung der zentralen Pumpleitung, im Aufnahmeelement Abstandsmittel angeordnet. Diese Abstandsmittel können als Noppen, Rippen, Stege o.Ä. ausgebildet sein und dienen der Fixierung eines Hohlraums zwischen den jeweiligen Wandungen, so dass ausreichend Flüssigkeit in diesem Bereich aufgenommen werden kann. Dabei können die Abstandsmittel auch derart ausgebildet sein, dass eine Art umgekehrter Venturi-Düsen-Effekt hervorgerufen wird, durch welchen das einströmende Wasser in Richtung des Betankungsmoduls durch die zentrale Pumpleitung bzw. den Schlauch in Richtung der Tankmodule bewegt wird. Als Material für den Schlauch bzw. das Aufnahmemittel können insbesondere Kunststoffe, insbesondere auch gummiähnliche Kunststoffe bzw. Gummi, gegebenenfalls mit Kohle- bzw. Glasfasern verstärkt, verwendet werden - es können jedoch auch wickelbare Kohlefaserrohre bzw. Leichtmetallkonstruktionen Anwendung finden. Im Wesentlichen müssen der Schlauch und auch das Aufnahmeelement, welches aus den gleichen Materialien hergestellt werden kann, ausreichend formstabil sein, um die auf diese einwirkenden Drücke sowie sonstige Belastungen, insbesondere Zugbelastungen bei einer Betankung im Flug, aufnehmen zu können. Der Schlauch und/oder das Aufnahmemittel können je nach Anforderung unterschiedliche Querschnitte und/oder Durchmesser aufweisen, so dass beispielsweise abgestimmt auf eine Betankung im Flug der einwirkende Luftwiderstand beeinflusst wird, auch durch die Wahl des Materials und die Anzahl der Wandungen, so dass der Eintauchwinkel des Aufnahmeelements modifiziert und/oder eine Richtungsstabilisierung verwirklicht ist. Durch eine Änderung der Geometrie zumindest der äußeren Wandung des Aufnahmeelements kann die Druckverteilung im Inneren desselben beeinflusst werden, beispielsweise wenn die äußere Wandung kegelstumpfförmig ausgebildet wird. Hierdurch kann letztendlich ein erhöhter Wirkungsgrad bei der Betankung erzielt werden.

Vorzugsweise ist auf der dem Betankungsmodul zugewandten Seite des Schottmoduls eine bewegbar ausgebildete Entleerungsvorrichtung angeordnet. Diese kann je nach Bedarf unterschiedlich große Auslassöffnungen und entsprechende Einlassöffnungen zu dem im Schottmodul angeordneten Sammeltanksegment aufweisen. Bei Vorsehung einher sehr großen Auslassöffnung, beispielsweise einer rechtwinkligen, welche zum Sammelschacht etwa identische Abmessungen aufweist, ist eine sehr schnelle Entleerung ermöglicht.

Denn durch Vorsehung eines möglichst großen Querschnitts kann bei einer hohen Wassersäule im Tankmodul durch den dann großen Druck eine sehr schnelle und gleichmäßige Entleerung der erfindungsgemäßen Vorrichtung erfolgen.

Die Entleerungsvorrichtung kann insbesondere auch zusätzlich Auslassventile, Sprühvorrichtungen o.Ä. aufweisen, mit welchen vor allem die Abgabe der Flüssigkeit kontrolliert werden kann. Die Entleerungsvorrichtung kann vorzugsweise gleichzeitig als Auflage und/oder zur Ausrichtung für den abgewickelten Schlauch bzw. das Aufnahmeelement dienen bzw. das Aufwickeln derselben unterstützen. Hierzu ist die Entleerungsvorrichtung vorzugsweise in einem Querschnitt ausgeführt, welcher dem Querschnitt des Sammelschachts der Tankmodule und dem entsprechenden Sammeltanksegment des Schottmoduls entspricht. Dabei kann an der dem Schottmodul zugewandten Seite vorzugsweise ein Gelenk, beispielsweise ein Faltengelenk, vorgesehen sein, welches ein Abbiegen der Entleerungsvorrichtung weg von dem über dieser angeordneten Betankungsmodul ermöglicht. Durch die beschriebene Ausbildung der Entleerungsvorrichtung kann eine große Menge Flüssigkeit auf einmal aus der erfindungsgemäßen Vorrichtung abgegeben und dabei über einen Bereich großer Breite gleichmäßig verteilt werden. Des Weiteren ist die Entleerungsvorrichtung vorzugsweise derart ausgebildet, dass deren Bautiefe in Fließrichtung der abfließenden Flüssigkeit größer ist als die Bautiefe des über dieser angeordneten Betankungsmoduls. Dann kann die Entleerungsvorrichtung vorteilhafterweise unterstützend bei der Abwicklung und Aufwicklung des Schlauchs bzw. des an diesem befestigten Aufnahmeelements dienen. Die Führung des Schlauchs bzw. des Aufnahmeelements kann dabei dadurch weiter verbessert werden, dass auf der dem Betankungsmodul zugewandten Seite der Entleerungsvorrichtung Führungselemente seitlich vorgesehen sind, welche insbesondere auch V-förmig ausgebildet sein können, wodurch eine Zentrierung der Führung des Schlauches bzw. des Aufnahmeelements auf der dem Betankungsmodul zugewandten Seite der Entleerungsvorrichtung erfolgt.

Die Tankmodule weisen bevorzugt eine im oberen Scheitelbereich derselben liegende Entlüftung auf, welche beispielsweise im Falle des Transports mit einem Schraubverschluss verschließbar und bei Entleerung wieder geöffnet wird. Hierdurch wird ein Druckausgleich gerade beim Betanken und beim Entleeren der erfindungsgemäßen Vorrichtung ermöglicht. Dabei können in diesen Entlüftungen neben Ventilen auch Steuervorrichtungen vorgesehen werden, welche in Abhängigkeit von dem in den Tankbehältern herrschenden Druck die Zufuhr von Luft in das Innere der Tankbehälter steuern. Die Tankbehälter selbst sind vorzugsweise als Schlingertanks ausgebildet und können dabei insbesondere zur Stabilisierung mit im Inneren angeordneten Festigungselementen, insbesondere Schotts, versehen sein. Diese können in Längsrichtung der Tankbehälter oder aber senkrecht hierzu in diesen angeordnet und dabei insbesondere als Steg- und/oder Wandelemente bzw. Schotts ausgebildet sein. Hierdurch wird die Bewegung der aufgenommenen Flüssigkeit bei Roll- oder Nickbewegungen des Fluggeräts gedämpft.

Diese und weitere Vorteile der vorliegenden Erfindung werden anhand der folgenden Figuren näher erläutert, die beispielhafte Ausführungsformen der Erfindung darstellen. Es zeigen:
- Fig. 1: eine perspektivische schematische Darstellung der erfindungsgemäßen Vorrichtung;
- Fig. 2: eine perspektivische Darstellung des Tankmoduls;
- Fig. 3: eine perspektivische Darstellung des Schottmoduls;
- Fig. 4: eine perspektivische Darstellung des Betankungsmoduls; und
- Fig. 5: eine Schnittansicht entlang des Schnittes A - A der Fig. 4 des Aufnahme- elements;
- Fig. 6: eine alternative Ausführungsform des Aufnahmeelements; und
- Fig. 7: die Ausführungsform gemäß Fig. 6 in einer Teilschnitt-Ansicht.

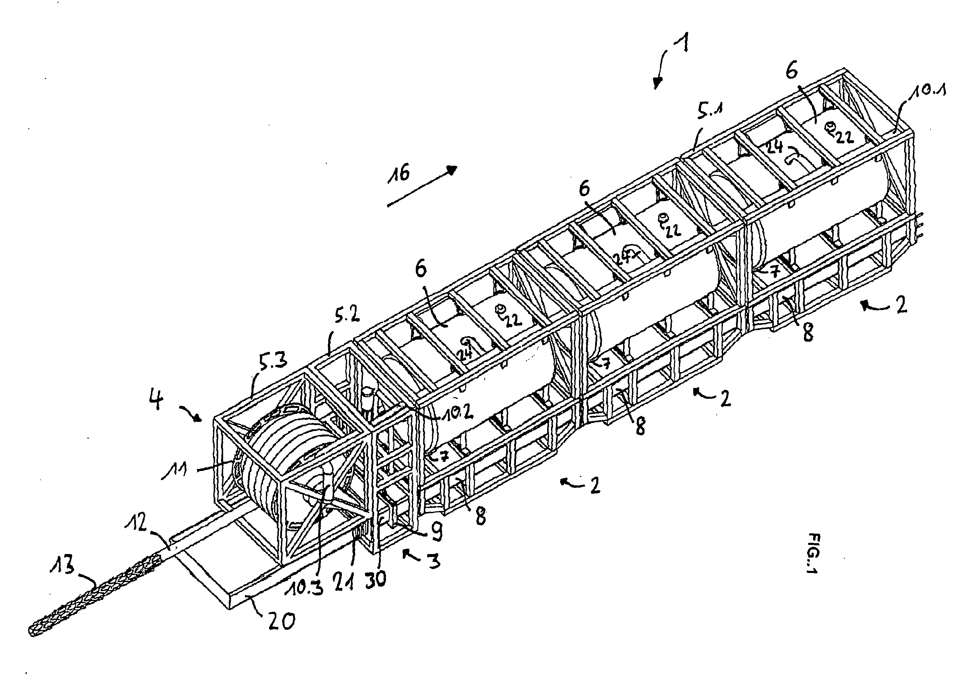

Fig. 1 zeigt eine insgesamt mit der Bezugsziffer 1 bezeichnete erfindungsgemäße Vorrichtung zur Aufnahme und/oder Abgabe von Flüssigkeiten aus einem Fluggerät, insbesondere im Flug. Diese weist dabei drei Tankmodule 2 sowie ein Schottmodul 3 und ein Betankungsmodul 4 auf. Die genannten Module sind dabei über eine Zufuhrleitung 10.1, 10,2 und 10.3 miteinander verbunden, über welche mittels eines Aufnahmeelements 13 und eines Schlauchs 12 aufgenommene Flüssigkeiten in Tankbehältern 6 der Tankmodule 2 über Zuläufe 24, angeordnet im Scheitelbereich der Tankbehälter 6, transportiert wird.

Die Tankmodule 2 weisen einen Sammeltank 8 auf, welcher über einen Domschacht 7 mit dem Tankbehälter 6 in Verbindung steht. Der Tankbehälter 6 kann dabei insbesondere als Schlingertank ausgebildet sein. Das aus den drei Tankmodulen 2 bestehende System kann als ein System kommunizierender Röhren aufgefasst werden. Daher ist es auch möglich, beispielsweise nur an dem dem Schottmodul 3 nächst angeordneten Tankmodul 2 eine Zuführung 24 vorzusehen, da über das System kommunizierender Röhren auch die weiteren Tankbehälter 6 der weiteren Tankmodule 2 mit Flüssigkeit befüllt werden. In den Verbindungsbereichen zwischen benachbarten Tankmodulen 2 selbst können gegebenenfalls Verschlusselemente vorgesehen werden, welche in den Sammeltank 8 eingreifen und diesen verschließen. Es können auch Schottmodule 3 zwischen den einzelnen Tankmodulen 2 angeordnet sein.

An dem dem Betankungsmodul 4 abgewandten Ende der erfindungsgemäßen Vorrichtung 1 ist im letzten Tankmodul 2 der Sammeltank 8 verschlossen durch ein Deckelelement, welches auf den offenen Flansch des Sammelschachtes 8 aufgebracht werden kann, um ein Auslaufen der Flüssigkeit aus der Vorrichtung zu verhindern. Des Weiteren können neben den drei in Fig. 1 gezeigten Tankmodulen 2 der erfindungsgemäßen Vorrichtung auf beiden Seiten parallel zu diesen weitere Tankmodule vorgesehen werden, wobei diese dann über hier nicht gezeigte Verbindungsleitungen, welche beispielsweise Kugelhähne aufweisen können, welche über, gegebenenfalls ebenfalls verschließbare, Sammeltanks 8 und/oder Tankbehälter 6 miteinander verbunden sind. Hierdurch kann eine großflächige Anordnung an Tankmodulen 2 unter Berücksichtigung der vorhandenen Abmessungen je nach Fluggerätetyp vorgenommen werden. Auch eine Übereinanderstapelung der Tankmodule 2 ist denkbar, wobei dann jedoch aufwändigere Verbindungen der jeweiligen Sammeltanks 8 und/oder Tankbehälter 6 vorgesehen sein müssen.

Das Schottmodul 3 weist ein Verschlusselement 9 auf, welches als Schieber ausgebildet ist und über Hubzylinder betrieben werden kann. In Fig. 1 ist das Verschlusselement 9 in Schließstellung gezeigt. Bei Öffnung desselben kann die sich in den Tankmodulen 2 befindliche Flüssigkeit durch eine Entleerungsvorrichtung 20 der Vorrichtung 1 entnommen werden, wobei die Entleerungsvorrichtung 20 über ein Schachtsegment 30 des Schottmoduls 3, in dessen Mitte das Verschlusselement eingreift, verbunden ist.

Benachbart dem Schachtmodul 3 ist ein Betankungsmodul 4 gezeigt, welches eine als Winde arbeitende Wickelvorrichtung 11 aufweist, auf welcher ein Schlauch 12 auf- und abwickelbar ist. Der Schlauch 12 trägt an seinem dem Betankungsmodul 4 entgegengesetzten Ende ein Aufnahmeelement 13, welches der Aufnahme von Flüssigkeiten, insbesondere auch im Flug, dient. Die aufgenommene Flüssigkeit gelangt über die Zufuhrleitung 10.3 sowie die weiteren Zufuhrleitungssegmente 10.2 und 10.1 in die Tankmodule 2. Unterhalb des Betankungsmoduls 4 ist die Entleerungsvorrichtung 20 angeordnet, welche in ihrer Längserstreckung über das Betankungsmodul 4 hinausreicht, so dass hierdurch bei der Betankung der Vorrichtung 1 eine Unterstützung des Ab- und Aufwickelns des Schlauches 12 mit dem Aufnahmeelement 13 von der Wickelvorrichtung 11 gegeben ist.

Sämtliche Module 2, 3 und 4 sind in einer Rohrrahmenkonstruktion 5.1, 5.2 und 5.3 angeordnet, welche eine größtmögliche Flexibilität und Platz sparende Anordnung der einzelnen Module gewährleistet. Zudem kann hierdurch eine exakte Ausrichtung der einzelnen Module zueinander sichergestellt werden.

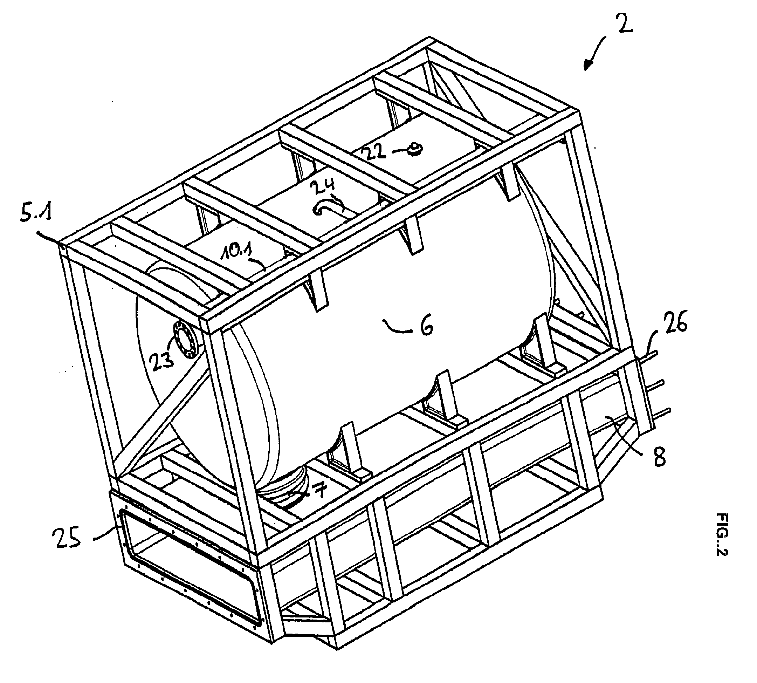

Fig. 2 zeigt im Detail ein einzelnes Tankmodul 2. Dieses weist einen Tankbehälter 6 auf, welcher über einen Domschacht 7 mit dem Sammeltank 8 verbunden ist. An dem einen Ende weist der Sammeltank 8 einen Flansch 25 auf, welcher zudem Ausnehmungen zur Aufnahme von Steckelementen aufweist. An dem diesem Flansch 25 entgegengesetzten Ende des Sammeltanks 8 ist ebenfalls ein Flansch vorgesehen, welcher entsprechend Steckelemente 26 aufweist, welche in einen Flansch 25 eines benachbarten Tankmoduls 2 eingreifen oder, sollte das Tankmodul 2 das Letzte in einer Reihe sein, mit einem entsprechenden Deckelverschluss versehen werden können. So oder ähnlich können auch die Verbindungen der weiteren Module ausgebildet sein.

Das Tankmodul 2 weist innerhalb der Rahmenkonstruktion 5.1 die Zufuhrleitung 10.1 auf, welche über an beiden Enden derselben angeordnete Flansche sicher mit benachbarten Tankmodulen oder einem Schottmodul verbunden werden können. Sollte hier wiederum das Tankmodul 2 das Letzte einer Reihe bilden, so kann der entsprechende Flansch 23 mit einem Flanschdeckel sicher verschlossen werden, um ein Auslaufen der aufzunehmenden Flüssigkeit sicher zu vermeiden. Über eine im Scheitelbereich des Tankbehälters 6 angeordnete Zuführung 24 gelangt die Flüssigkeit durch die Zufuhrleitung 10.1 in den Tankbehälter 6. Über eine Entlüftung 22 erfolgt ein Druckausgleich sowohl bei Betankungen als auch beim Ablassen einer Flüssigkeit aus dem Tankbehälter 6.

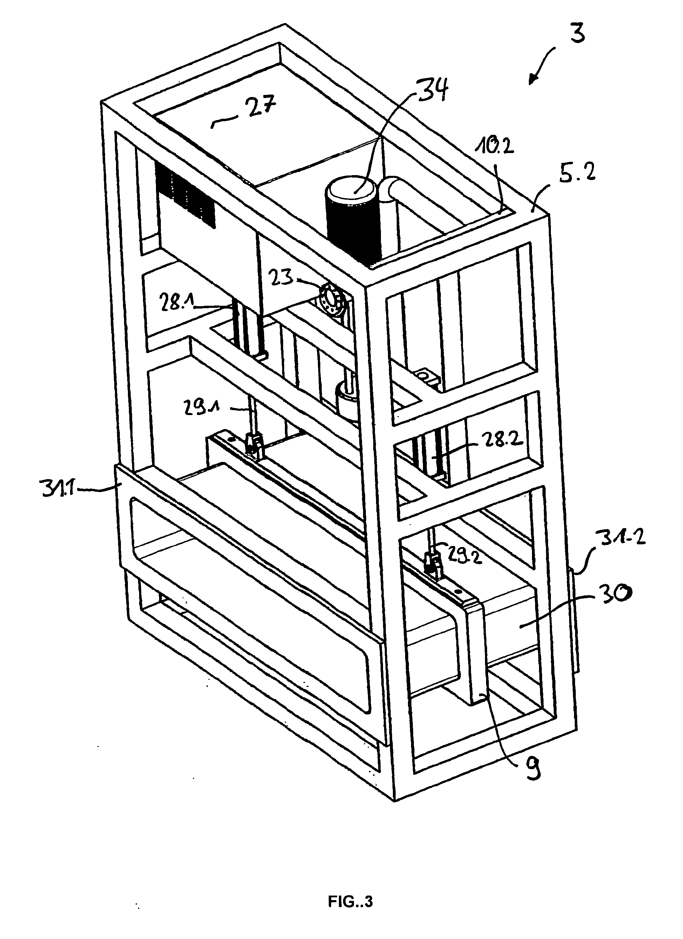

Fig. 3 zeigt im Detail das Schottmodul 3, welches in einer Rohrrahmenkonstruktion 5.2 angeordnet ein Schachtsegment 30 aufweist, in welches ein Verschlusselement 9, nämlich ein Schiebeelement, eingreift. Das Verschlusselement 9 ist über Stabelemente 29.1 und 29.2 mit Hubzylindern 28.1 und 28.2 verbunden, welche wiederum mit einem Antrieb 27 verbunden sind. Bei Betätigung des Antriebs 27 kann das Verschlusselement 9 dann zwischen einer Offen- und Geschlossen-Stellung gesteuert werden. Fig. 3 zeigt das Schottmodul 3 mit dem Verschlusselement 9 in geschlossener Stellung. Über die Flansche 30.1 und 30.2 kann das Schottmodul 3 einerseits mit einer Entleerungsvorrichtung 20 verbunden werden, andererseits mit Tankmodulen 2. Das Schottmodul 3 weist des Weiteren eine Pumpvorrichtung 34 auf, welche als Ansaugpumpe Flüssigkeit, aufgenommen mittels des Aufnahmeelements 13, in die Tankmodule pumpt.

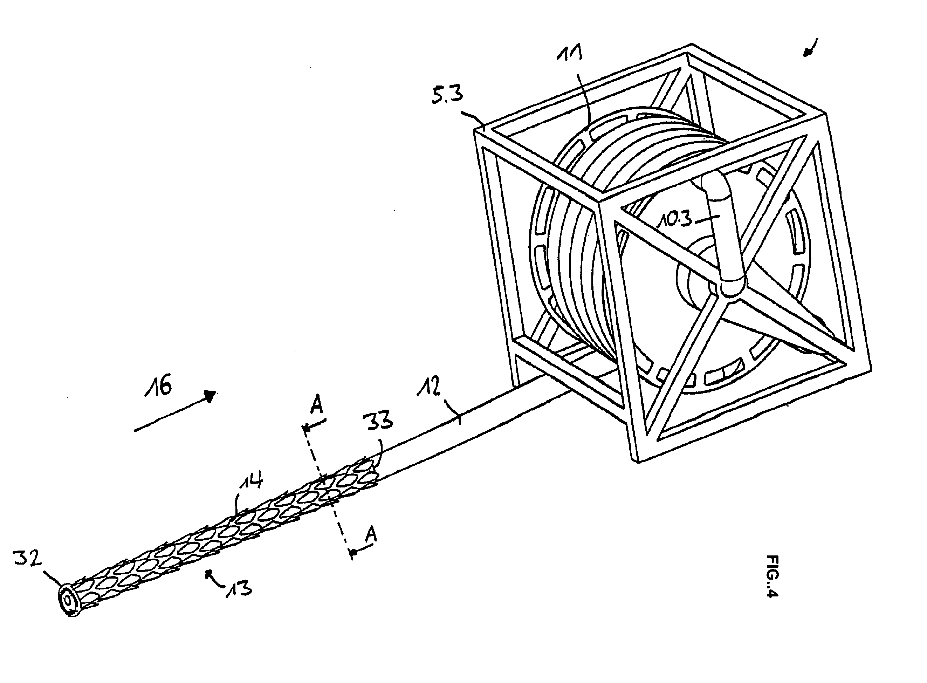

Fig. 4 zeigt das Betankungsmodul 4 mit der Wickelvorrichtung 11, auf welcher ein Schlauch 12 auf- und abwickelbar ist. Dieser Schlauch 12 weist in seinem der Wickelvorrichtung 11 entgegengesetzten Ende mittels eines Bajonettverschlusses 33, welcher lediglich angedeutet gezeigt ist, verbunden, ein Aufnahmeelement 13 auf, welches eine Vielzahl V-förmiger Einschnitte und hierdurch gebildete Öffnungen 14 aufweist. An seinem der Wickelvorrichtung 11 entgegengesetzten Ende weist dieses ein Verschlussmittel 32 auf. Im Inneren der Wickelvorrichtung 11 ist eine hier nicht gezeigte Pumpvorrichtung angeordnet. Das Betankungsmodul 4 weist ebenfalls eine Rohrrahmenkonstruktion 5.3 auf. Die über das Aufnahmeelement 13 und den Schlauch 12 aufgenommene Flüssigkeit wird über eine Zufuhrleitung 10.3 aus dem Betankungsmodul 4 über einen hier nicht näher gezeigten Flansch 23 über das Schottmodul 3 letztendlich den Tankmodulen 2 zugeführt.

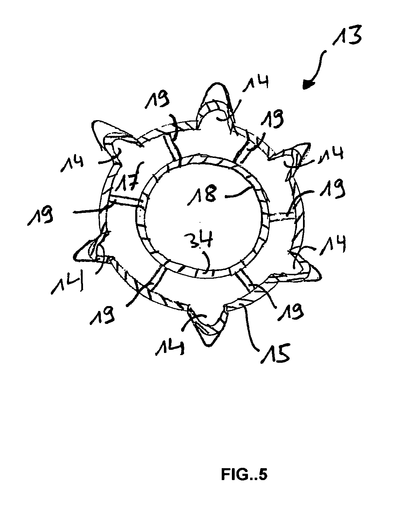

Fig. 5 zeigt nun eine Schnittansicht entlang des Schnitts A - A der Fig. 4 des Aufnahmeelements 13. Deutlich ist zu erkennen, dass es sich hier um einen zweiwandigen Aufbau des Aufnahmeelements 13 handelt mit einer zentralen Pumpleitung 18, mit einer inneren Wandung 34, und einer äußeren Wandung 15, welche eine Vielzahl von Öffnungen 14 aufweist. Zwischen einer äußeren Wandung 15 des Aufnahmeelements 13 und der zentralen Pumpleitung 18 ist ein Bereich 17 gebildet, welcher durch mehrere Abstandsmittel 19, welche hier als Stegsegmente ausgebildet sind, definiert freigehalten wird, so dass die in diesem Bereich 17 über die Öffnungen 14 aufgenommene Flüssigkeit letztendlich durch die zentrale Pumpleitung 18 der Vorrichtung zugeführt werden kann.

Das Aufnahmeelement 13 in der in den Fig. 1 bis 5 gezeigten Ausführungsform ermöglicht insbesondere die Betankung der Vorrichtung 1 mittels eines Fluggeräts im Flug. Dabei wird nach Öffnen z.B. einer Ladeluke des Fluggeräts von der Wickelvorrichtung 11 der Schlauch 12 mit dem Aufnahmeelement 13 beispielsweise über dem Meer abgelassen, bis das Aufnahmeelement 13 in Wasserkontakt steht. Dabei wird bei einer angenommenen Fluggeschwindigkeit von ca. 200 km/h und einer Flughöhe von 15 bis 20 m über der Wasseroberfläche der Schlauch 12 und das Aufnahmeelement 13 im Hinblick auf deren Gewicht und Aerodynamik optimiert ausgelegt. Bevorzugt ist dabei der Aufsetzwinkel des Schlauches auf das Wasser in einem Bereich von etwa 35° bis 60°, weiter bevorzugt in einem Bereich von 40° bis 50°, gewählt. Dabei nimmt das Aufnahmeelement 13 über die mindestens eine Öffnung 14, welche entgegen der Flugrichtung 16, verdeutlicht durch einen Pfeil in den Fig. 1 und 4, ausgestellt ist, Flüssigkeit, d.h. Wasser, auf - und zwar unabhängig davon, ob das Aufnahmeelement 13 unter Wasser geführt wird oder auf der Wasseroberfläche aufliegt bzw. aufschlägt.

Das Wasser strömt dabei durch die mindestens eine Öffnung 14 in den Bereich 17 zwischen einer äußeren Wandung 15 und der zentralen Pumpleitung 18 mit der inneren Wandung 34. Im Kopfbereich ist das Aufnahmeelement 13 derart ausgebildet, dass dieses einerseits mittels des Verschlussmittels 32 verschlossen ist, andererseits die zentrale Pumpleitung 18 deutlich beanstandet von dem Verschlusselement 32 im Inneren des Aufnahmeelements 13 endet, so dass sich die in dem Bereich 17 des Aufnahmeelements 13 befindliche Flüssigkeit im Kopfbereich des Aufnahmeelements 13 sammelt und durch die zentrale Pumpleitung 18 der Vorrichtung 1 zugeführt werden kann. Die zentrale Pumpleitung 18 weist also eine geringere Länge als die äußere Wandung 15 des Aufnahmeelements 13 auf.

Das durch eine Ansaugpumpvorrichtung, welche im Betankungsmodul 4 im Inneren der Wickelvorrichtung 11 angeordnet ist, angesaugte Wasser gelangt über die Zufuhrleitungen 10.3 und 10.2 und letztendlich 10.1 in die einzelnen Tankbehälter 6 der Tankmodule 2 über die Zuführungen 24. Diese werden aufgrund des gebildeten Systems kommunizierender Röhren gleichmäßig befüllt. Über die Entlüftungen 24, welche insbesondere als Ventile ausgelegt sind, welche zudem steuerbar in Abhängigkeit des sensorisch bestimmten Drucks im Inneren der Tankbehälter 6 ausgebildet sind, erfolgt eine Druckanpassung aufgrund der bei der Betankung ausströmenden bzw. bei einer Entleerung der Vorrichtung 1 nachströmenden Luft. Durch nicht näher gezeigte Füllstandsanzeigen an den Tankbehältern 6 der Tankmodule 2 kann festgestellt werden, dass die Tankmodule 2 voll befüllt sind - auch automatisch -, woraufhin der Pumpvorgang beendet und anschließend der Schlauch 12 samt Aufnahmeelement 13 mittels der Wickelvorrichtung 11 auf dieser aufgewickelt wird.

Anschließend wird nach Aufnahme die Flüssigkeit, insbesondere Wasser, mit dem Fluggerät in das Zielgebiet gebracht und nach Öffnung der Ladeluke und gegebenenfalls Anbringung einer der Anwendung angepassten Entleerungsvorrichtung 20 entsprechender Länge mittels Flanschen an dem Schottmodul 3 das Verschlusselement 9 über den Antrieb 27 geöffnet, so dass die aufgenommene Flüssigkeit über die Entleerungsvorrichtung 20 aus der Vorrichtung 1 entnommen und über dem Zielgebiet abgegeben werden kann.

Selbstverständlich ist es auch möglich, mit der Vorrichtung 1 durch eine Bodenbetankung Flüssigkeit aufzunehmen, wobei dann als Aufnahmeelement 13 ein einfaches Schlauchstück vorgesehen werden kann. Die Pumpvorrichtung kann dann alternativ an dem dem Schlauch 12 entgegengesetzten Ende des Aufnahmemittels 13 angeordnet sein.

Ist vorgesehen, beispielsweise eine Sprühnebellöschung vorzunehmen, so kann an der Entleerungsvorrichtung 20 ein entsprechender Auslasskopf angebracht werden. Zusätzlich können der aufgenommenen Flüssigkeit über die Entlüftungen 22 oder aber zusätzliche Eingabeöffnungen in die einzelnen Behälter Additive, beispielsweise Löschadditive, Pestizide, Düngemittel etc. je nach Bedarf und Anwendung zugegeben werden.

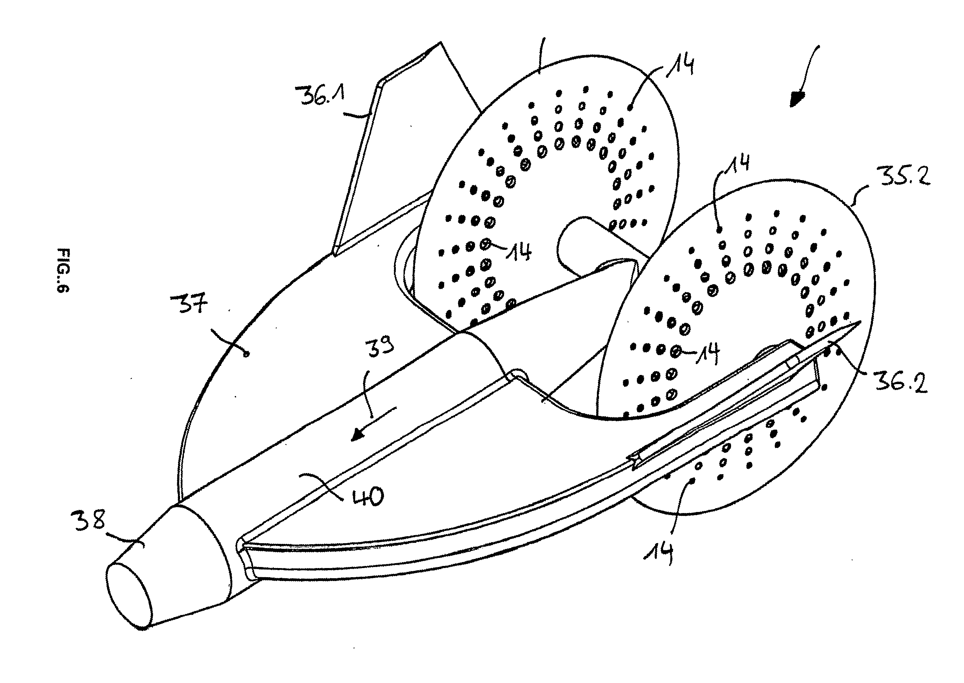

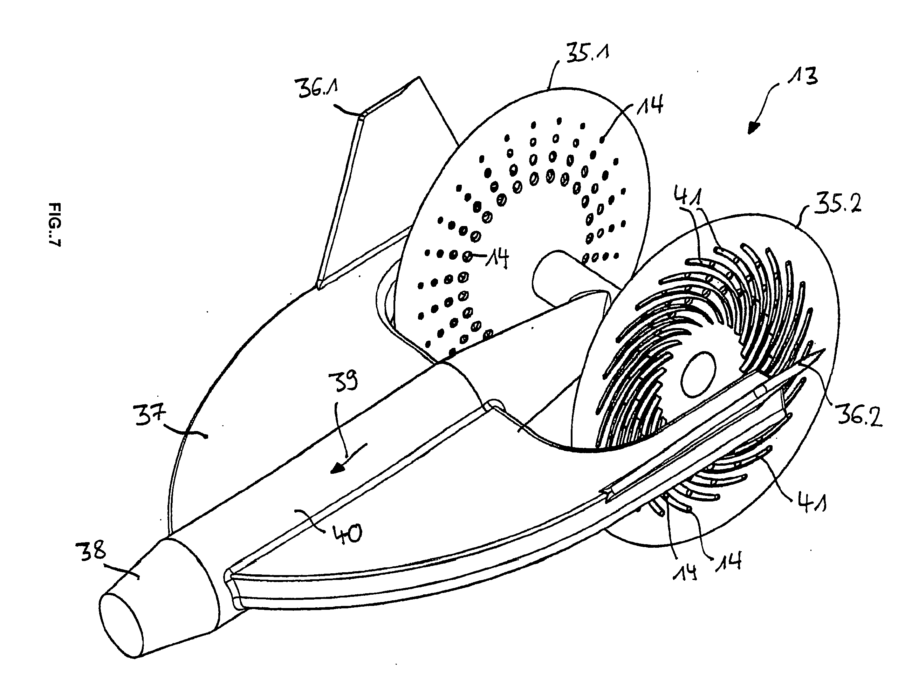

Fig. 6 und 7 zeigen eine alternative Ausführungsform des Aufnahmeelements 13. Das Aufnahmeelement 13 weist dabei zwei als doppelwandige Scheiben ausgebildete Rotationskörper 35.1 und 35.2 auf, welche eine Vielzahl von Öffnungen 14 aufweisen. Die Rotationskörper 35.1 und 35.2 sind an einem Grundkörper 37 gehalten, an dessen Längsseiten zur Stabilisierung flossenartige Elemente 36.1 und 36.2 angeordnet sind. Über ein Kupplungsglied 38 ist das Aufnahmeelement 13 mit einem Schlauch 12 (hier nicht gezeigt) verbindbar. Flüssigkeit wird durch die Vielzahl von Öffnungen 14 in den Rotationskörpern 35.1 und 35.2 aufgenommen und über das Verbindungsglied 39 in Richtung auf das Betankungsmodul hin durch den hier nicht gezeigten Schlauch 12 gefördert. Dabei kann das in Figur 6 gezeigte Aufnahmeelement zusätzlich einen eigenen Antrieb aufweisen, welcher mit der Geschwindigkeit des Fluggeräts synchronisiert werden kann. Dabei können auch die beiden Rotationskörper 35.1 und 35.2 aktiv angetrieben werden.

Der Antrieb des Aufnahmeelements, vorzugsweise in Synchronisation mit der Geschwindigkeit des Fluggeräts, hat den Vorteil, dass hierdurch der Widerstand des Wassers überwunden werden kann, bzw. das Aufnahmeelement 13 stabilisiert in bzw. auf der Flüssigkeit, insbesondere Wasser, geführt und Flüssigkeit von dieser aufgenommen werden kann.

Fig. 7 zeigt nun die in Fig. 6 gezeigte alternative Ausführungsform des Aufnahmeelements 13, wobei in einer Teilschnitt-Ansicht das Scheibenrad 35.2 gezeigt ist. Dabei ist deutlich zu erkennen, dass die Öffnungen 14 radial verlaufend durch innen liegende Nuten 41 miteinander verbunden sind. Durch diese Ausbildung der Innenoberfläche der Scheibenräder 35.2 ist es möglich, große Mengen an Flüssigkeiten effektiv insbesondere auch bei Vorsehung eines aktiven Antriebs derselben in die Vorrichtung 1 zu fördern.

Die vorliegende Erfindung stellt somit eine hochflexible Vorrichtung zur Verfügung, mit welcher Flüssigkeiten stationär wie auch im Flug rasch aufgenommen und wieder abgegeben werden können.

## Patentansprüche

1. Vorrichtung (1) zur Aufnahme und/oder Abgabe von Flüssigkeiten aus einem Fluggerät, insbesondere im Flug, anbringbar in einem Fluggerät,
- mit einem Tankmodul (2) mit mindestens einem Tankbehälter (6), der über mindestens einen Verbindungsschacht (7) mit einem Sammeltank (8) verbunden ist;
- mit einem über den Sammeltank (8) mit dem Tankmodul (2) verbindbaren Schottmodul (3) mit einem Verschlusselement (9), mittels welchem in Offenstellung Flüssigkeiten aus dem Tankmodul (2) abgelassen werden; und
- mit einem Betankungsmodul (4), welches über mindestens eine Zufuhrleitung (10) mit dem Tankmodul (2) verbunden ist,
- **dadurch gekennzeichnet, dass** das Betankungsmodul (4) einen an einer Wickelvorrichtung (11) angeordneten Schlauch (12) mit einem Aufnahmeelement (13) aufweist, dieses Aufnahmeelement (13) mindestens eine Öffnung (14) aufweist und, wenn aus dem Fluggerät ins Wasser abgelassen, Wasser aufnimmt, so dass die Betankung der Vorrichtung (1) erfolgt.

2. Vorrichtung gemäß Anspruch 1, **dadurch gekennzeichnet, dass** das Aufnahmeelement (13) mindestens zweiwandig (15, 34) aufgebaut ist.

3. Vorrichtung gemäß einem der vorhergehenden Ansprüche, **dadurch gekennzeichnet, dass** die mindestens eine Öffnung (14) in einer äußeren Wandung (15) des Aufnahmeelements (13) ein Einschnitt ist, die entgegen der Flugrichtung (16) ausgestellt ist

4. Vorrichtung gemäß einem der vorhergehenden Ansprüche, **dadurch gekennzeichnet, dass** das Betankungsmodul (4) oder das Schottmodul (3) eine Pumpvorrichtung aufweist, durch welche die in dem Bereich (17) zwischen äußerer (15) und der mindestens einen weiteren inneren Wandung (34) des Aufnahmeelements (13) aufgenommene Flüssigkeit über eine zentrale, innen liegende Pumpleitung (18) des Aufnahmeelements (13) und dem Schlauch (12) in das Tankmodul (2) gepumpt wird, wobei die Pumpleitung (18) die innere Wandung (34) des Aufnahmeelements (13) bildet.

5. Vorrichtung gemäß einem der vorhergehenden Ansprüche, **dadurch gekennzeichnet, dass** zwischen der zentralen Pumpleitung (18) und der äußeren, mit Öffnungen (14) versehenen Wandung (15) des Aufnahmeelements (13) Abstandsmittel (19) angeordnet sind.

6. Vorrichtung gemäß einem der vorhergehenden Ansprüche, **dadurch gekennzeichnet, dass** das Aufnahmeelement (13) zur Stabilisierung mindestens eine Flosse aufweist.

7. Vorrichtung gemäß einem der vorhergehenden Ansprüche, **dadurch gekennzeichnet, dass** das Aufnahmeelement (13) zur Beschwerung Gewichte aufweist.

8. Vorrichtung gemäß einem der vorhergehenden Ansprüche, **dadurch gekennzeichnet, dass** auf der dem Betankungsmodul (4) zugewandten Seite des Schottmoduls (3) eine bewegbar ausgebildete Entleerungsvorrichtung (20) angeordnet ist.

9. Vorrichtung gemäß einem der vorhergehenden Ansprüche, **dadurch gekennzeichnet, dass** die Entleerungsvorrichtung (20) als Auflage und/oder zur Ausrichtung für den Schlauch (12) bzw. das Aufnahmeelement (13) dient.

10. Vorrichtung gemäß einem der vorhergehenden Ansprüche, **dadurch gekennzeichnet, dass** das Tankmodul (2), das Schottmodul (3) und/oder das Betankungsmodul (4) als Rohrrahmenkonstruktion (5) ausgebildet ist.

11. Vorrichtung gemäß einem der vorhergehenden Ansprüche, **dadurch gekennzeichnet, dass** das Tankmodul (2) mindestens eine Entlüftung (22) aufweist.

## Claims

1. Device (1) for receiving liquids in an aircraft and/or releasing liquids there from, in particular whilst in flight, the said device being arranged in an aircraft,
- including a tank module (2) including at least one tank container (6), connected to a collecting tank (8) via at least one connecting shaft (7);
- including a bulkhead module (3) which is adapted to be connected to the tank module (2) via the collecting tank (8), including a closing element (9) by means of which, in the open position, liquids are released from the tank module (2); and
- including a filling module (4), which is connected to the tank module (2) via at least one feeding line (10),
- **characterized in that** the filling module (4) comprises a hose pipe (12) with a receiving element (13), arranged on a coiling device (11), this receiving element (13) comprising at least one aperture (14), and receiving liquids in case such are released from the aircraft, so that filling of the device (1) may be performed.

2. Device according to claim 1, **characterized in that** the receiving element (13) is at least double-walled (15, 34).

3. Device according to any one of the preceding claims, **characterized in that** the at least one aperture (14) in an exterior wall (15) of the receiving element (13) is an incision, which is raised for the aperture to face in the direction of the flight (16).

4. Device according to any one of the preceding claims, **characterized in that** the filling module (4) or the bulkhead module (3) comprises a pumping device, by means of which the liquid received in the region (17) between the exterior (15) and the at least one further interior wall (34) of the receiving element (13) is pumped into the tank module (2) via a central internal line (18) of the receiving element (13) and the hose pipe (12), the pumping line (18) forming the interior wall (34) of the receiving element (13).

5. Device according to any one of the preceding claims, **characterized in that** between the central pumping line (18) and the exterior wall (15), provided with apertures (14), of the receiving element (13) spacer means (19) are provided.

6. Device according to any one of the preceding claims, **characterized in that** the receiving element (13) comprises at least one fin for stabilizing purposes.

7. Device according to any one of the preceding claims, **characterized in that** the receiving element (13) comprises weights for weighting the latter.

8. Device according to any one of the preceding claims, **characterized in that** on the side of the bulkhead module (3) facing the filling module (4), a discharge device (20), adapted tot be mobile, is provided.

9. Device according to any one of the preceding claims, **characterized in that** the discharge device (20) serves as a support and/or for the alignment of the hose pipe (12), the receiving element (13) respectively.

10. Device according to any one of the preceding claims, **characterized in that** the tank module (2), the bulkhead module (3) and/or the filling module (4) is designed as a tubular frame structure (5).

11. Device according to any one of the preceding claims, **characterized in that** the tank module (2) includes at least one vent (22).

## Revendications

1. Dispositif (1) destiné à ravitailler en liquides un aéronef et/ou à déverser des liquides à partir d'un aéronef, en particulier en vol, propre à être monté dans un aéronef,
- avec un module de stockage (2) équipé d'au moins une citerne (6), qui est reliée à un réservoir collecteur (8) par l'intermédiaire d'au moins une gaine de liaison (7) ;
- avec un module de cloisonnement (3), qui peut être relié au module de stockage (2) par l'intermédiaire du réservoir collecteur (8) et qui est muni d'un élément de fermeture (9), au moyen duquel, dans la position d'ouverture, les liquides peuvent être évacués hors du module de stockage (2) ; et
- avec un module de ravitaillement (4), qui est relié au module de stockage (2) via au moins une conduite d'acheminement (10),
- **caractérisé en ce que** le module de ravitaillement (4) comporte un tuyau flexible (12), agencé sur un dispositif d'enroulement (11) et muni d'un élément de ramassage (13), ledit élément de ramassage (13) comporte au moins une ouverture (14) et ramasse de l'eau au moment où il est abaissé dans l'eau hors de l'aéronef, de manière à effectuer le ravitaillement du dispositif (1).

2. Dispositif selon la revendication 1, **caractérisé en ce que** l'élément de ramassage (13) est réalisé au moins à double paroi (15, 34).

3. Dispositif selon l'une des revendications précédentes, **caractérisé en ce que** ladite au moins une ouverture (14) est une entaille dans une paroi extérieure (15) de l'élément de ramassage (13), ladite entaille étant orientée vers l'extérieur dans le sens opposé au sens de vol (16).

4. Dispositif selon l'une quelconque des revendications précédentes, **caractérisé en ce que** le module de ravitaillement (4) ou le module de cloisonnement (3) comporte un dispositif de pompage, par lequel le liquide, ramassé dans la zone (17) entre la paroi extérieure (15) et ladite au moins une paroi intérieure (34) de l'élément de ramassage (13), est pompé via une conduite de pompage (18) centrale intérieure de l'élément de ramassage (13) et via le tuyau flexible (12) dans le module de stockage (2), ladite conduite de pompage (18) formant la paroi intérieure (34) de l'élément de ramassage (13).

5. Dispositif selon l'une quelconque des revendications précédentes, **caractérisé en ce que** des moyens d'écartement (19) sont disposés entre la conduite de pompage (18) centrale et la paroi extérieure (15), munie des ouvertures (14), de l'élément de ramassage (13).

6. Dispositif selon l'une quelconque des revendications précédentes, **caractérisé en ce que** l'élément de ramassage (13) comporte au moins un flotteur en vue de le stabiliser.

7. Dispositif selon l'une quelconque des revendications précédentes, **caractérisé en ce que** l'élément de ramassage (13) comporte des poids pour l'alourdir.

8. Dispositif selon l'une quelconque des revendications précédentes, **caractérisé en ce que** sur le module de cloisonnement (3), sur son côté orienté vers le module de ravitaillement (4), est disposé un dispositif de vidage (20) réalisé de manière mobile.

9. Dispositif selon l'une quelconque des revendications précédentes, **caractérisé en ce que** le dispositif de vidage (20) est destiné à former un appui et/ou un alignement pour le tuyau flexible (12) et l'élément de ramassage (13).

10. Dispositif selon l'une quelconque des revendications précédentes, **caractérisé en ce que** le module de stockage (2), le module de cloisonnement (3) et/ou le module de ravitaillement (4) sont réalisés sous la forme d'une structure à cadre tubulaire (5).

11. Dispositif selon l'une quelconque des revendications précédentes, **caractérisé en ce que** le module de stockage (2) comporte au moins une purge d'air (22).
